# EUROPÄISCHE PATENTSCHRIFT

(11) **EP 3 395 435 B1**
(45) Veröffentlichungstag und Bekanntmachung des Hinweises auf die Patenterteilung: **26.02.2020**
(21) Anmeldenummer: 18160963.7
(22) Anmeldetag: 09.03.2018
(51) Int. Cl.: B01F 13/10, B01F 13/04, B01F 15/04, B01L 1/00

(54) **VERWENDUNG EINER MISCHSTATION FÜR INSBESONDERE FLÜSSIGE GEFAHRSTOFFE**
USE OF A MIXING STATION PARTICULARLY FOR LIQUID HAZARDOUS SUBSTANCES
UTILISATION D'UNE STATION DE MÉLANGE POUR, EN PARTICULIER, SUBSTANCES DANGEREUSES LIQUIDES

(30) Priorität: 25.04.2017 DE 202017102439 U
(43) Veröffentlichungstag der Anmeldung: 31.10.2018
(73) Patentinhaber: Düperthal Sicherheitstechnik GmbH & Co.KG, 63791 Karlstein (DE)
(72) Erfinder: Backhaus, Frank, 32051 Herford (DE)
(74) Vertreter: Andrejewski - Honke Patent- und Rechtsanwälte Partnerschaft mbB

(56) Entgegenhaltungen:
- WO-A1-2011/117196
- DE-A1- 19 963 799
- US-A1- 2014 150 379
- US-A1- 2015 291 411

## Beschreibung

Die Erfindung betrifft die Verwendung einer Mischstation für flüssige Gefahrstoffe, mit einer zu öffnenden und verschließbaren Kabine, ferner mit einer in der Kabine angeordneten Mischvorrichtung, welche eingangsseitig mit zumindest zwei Gefahrstoffbehältern verbunden ist und ausgangsseitig eine erzeugte Mischung an ein Aufnahmegefäß abgibt, und mit einer Zugangskontrolleinheit für einen Benutzer.

Eine Mischstation der einleitend beschriebenen Ausprägung wird im Großen und Ganzen in der DE 199 63 799 A1 beschrieben. Hier geht es um eine Ent- und Versorgestation zum automatisierten Umfüllen von flüssigen Laborchemikalien von Großgebinden in Kleingebinde. Außerdem wird das Entsorgen von flüssigen Laborreststoffen beschrieben. Die bekannte Mischstation ist dabei insgesamt in einer Umfüllkabine angeordnet. Das Gehäuse der Umfüllkabine ist aus Edelstahl gefertigt. Außerdem ist in diesem Zusammenhang ein begehbarer Abzug realisiert.

Darüber hinaus beschreibt die WO 2011/117196 A1 einen Sicherheitsschrank, welcher in seinem Inneren mit einer Medienabgabeeinheit ausgerüstet ist. Die Medienabgabeeinheit ist an eine Zugangskontrolleinheit angeschlossen. Hierdurch soll insbesondere eine unkontrollierte Medienentnahme vermieden und der Medienverbrauch eingedämmt werden.

Im Rahmen der US 2015/0291411 A1 wird eine Mischstation bzw. Abgabestation für Flüssigkeiten beschrieben. Hierbei kann es sich auch um Betriebshilfsstoffe handeln. Das alles geschieht in Abhängigkeit einer individuellen Kenngröße. Diese kann beispielsweise manuell eingegeben werden. Eine zusätzlich zu öffnende und verschließbare Kabine ist nicht vorgesehen.

Das Dokument US-A-2014/0150379 offenbart auch eine Mischstation mit einer zu öffnenden und verschließbaren Kabine.

Der Stand der Technik hat sich grundsätzlich bewährt. Allerdings besteht beim Mischen von Gefahrstoffen generell das Problem, dass unkontrolliert Dämpfe entstehen können. An dieser Stelle arbeitet der gattungsbildende Stand der Technik nach der DE 199 63 799 A1 zwar mit einem Abzug. Gleichwohl lassen sich Gefährdungen des Bedienpersonals hierdurch nicht zuverlässig ausschließen. Hier will die Erfindung insgesamt Abhilfe schaffen.

Der Erfindung liegt das technische Problem zugrunde, eine derartige Verwendung so weiter zu entwickeln, dass die Sicherheit erhöht ist und Gefährdungen des Bedienpersonals auf jeden Fall vermieden werden.

Zur Lösung dieser technischen Problemstellung ist eine gattungsgemäße Verwendung einer Mischstation für flüssige Gefahrstoffe im Rahmen der Erfindung dadurch gekennzeichnet, dass die die Mischvorrichtung umschließende Kabine zumindest während des Mischvorganges geschlossen ist und erst danach für den berechtigten Benutzer geöffnet wird.

Im Rahmen der Erfindung kommt also eine spezielle Kabine zum Einsatz. In der Kabine ist die Mischvorrichtung angeordnet. Außerdem finden sich in der Kabine noch die zumindest zwei Gefahrstoffbehälter, welche an den Eingang bzw. eingangsseitig der Mischvorrichtung angeschlossen sind. Darüber hinaus ist in der Kabine noch das Aufnahmegefäß vorgesehen, an welches die Mischvorrichtung ausgangsseitig die erzeugte Mischung abgibt. Schlussendlich ist die Kabine typischerweise mit zumindest einem Abzug ausgerüstet, um im Innern entstehende Dämpfe zuverlässig aus der Kabine abführen zu können.

Im Rahmen des Mischvorganges und bei der Entnahme der Gefahrstoffe aus dem jeweiligen Gefahrstoffbehälter können insbesondere Dämpfe entstehen, die gesundheitsgefährdend und/oder explosiv sind. Um in diesem Zusammenhang das Bedienpersonal optimal zu schützen, ist die fragliche Kabine erfindungsgemäß zumindest während des Mischvorganges geschlossen. Erst wenn der Mischvorgang abgeschlossen ist, das heißt nach dem Mischvorgang, wird die Kabine geöffnet. Die Öffnung erfolgt dabei zusätzlich nicht generell, sondern nur für den berechtigten Benutzer. Dazu muss sich der berechtigte Benutzer zuvor an der Zugangskontrolleinheit anmelden und seine Berechtigung nachweisen.

Die Zugangskontrolleinheit kann dabei grundsätzlich so arbeiten und ausgelegt sein, wie dies in der WO 2011/117196 A1 im Detail beschrieben wird. Tatsächlich prüft die Zugangskontrolleinheit beispielsweise einen Zugangscode des zutrittswilligen Bedieners auf Zulässigkeit. Bei dem Zugangscode kann es sich um eine alphanummerische Zeichenfolge, also eine Ziffer, einen Buchstaben oder ein Sonderzeichen einzeln oder in Kombination handeln, mit dessen Hilfe der zutrittswillige Bediener individualisiert wird. Grundsätzlich sind anstelle des Zugangscodes oder zusätzlich auch andere Vorgehensweisen der Zugangskontrolle denkbar.

Beispielsweise lassen sich auch andere den Bediener individualisierende Daten mit Hilfe der Zugangskontrolleinheit auswerten, beispielsweise biometrische Daten des zugangswilligen Bedieners. Auch ist es denkbar, dass sich der Bediener über eine Zugangskarte, einen Zugangschip etc. gegenüber der Zugangskontrolleinheit ausweist. Im Zusammenhang mit biometrischen Daten ist es denkbar, eine Augeniriserkennung, einen Fingerabdruckscan etc. zu realisieren.

Jedenfalls erfolgt mit Hilfe der Zugangskontrolleinheit eine Prüfung der Zugangsberechtigung des Benutzers oder Bedieners. Nur bei positiver Prüfung der Zugangsberechtigung kann der Benutzer die ausgangsseitig der Mischvorrichtung erzeugte Mischung und auch das Aufnahmegefäß aus der Kabine entnehmen. Außerdem ist es meistens lediglich dem zugangsberechtigten Benutzer möglich, eine Rezeptur für die Mischvorrichtung abarbeiten zu lassen, die Kabine beispielsweise zuvor zu öffnen und das Aufnahmegefäß für die Füllung abzustellen etc..

Grundsätzlich kann der Mischvorgang im Innern der Kabine aber auch vollkommen automatisch erfolgen und der Benutzer hat in diesem Fall erst Zugriff auf die Kabine, nachdem der Mischvorgang beendet ist. In diesem Fall ist das jeweilige Aufnahmegefäß für die erzeugte Mischung im Innern der Kabine vorhanden. Außerdem wird in diesem Fall die Rezeptur für die gewünschte Mischung regelmäßig bei geschlossener Kabine an die im Innern befindliche Mischvorrichtung übertragen. Zu diesem Zweck mag eine separate Einheit vorgesehen sein, an welcher die Rezeptur eingelesen und mit deren Hilfe die Rezeptur an die Mischvorrichtung übertragen wird. Das heißt, in diesem Fall wird die Rezeptur der Mischung in geschlossenem Zustand der Kabine an die Mischvorrichtung übermittelt.

Es ist aber auch möglich, dass sich der Benutzer zunächst an der Kontrolleinheit anmeldet und hinsichtlich seiner Zugangsberechtigung überprüft wird. Nach einer positiven Prüfung der Zugangsberechtigung kann die Kabine geöffnet werden, damit der Benutzer das Aufnahmegefäß im Innern platzieren kann. Anschließend wird typischerweise die Kabine wieder geschlossen. Das heißt, auch in diesem Fall wird die Rezeptur der Mischung in geschlossenem Zustand der Kabine an die Mischvorrichtung übermittelt. Dazu ist die fragliche Einheit, über welche die Rezeptur eingelesen und an die Mischvorrichtung übertragen wird, im Regelfall außenseitig an der Kabine vorgesehen. Gleiches gilt für die Zugangskontrolleinheit.

Auf diese Weise ist sichergestellt, dass die Gefahrstoffe aus den im Innern der Kabine befindlichen Gefahrstoffbehältern immer und ausschließlich dann an die Mischvorrichtung abgegeben werden, wenn die Kabine geschlossen ist, um entsprechend der zuvor eingestellten Rezeptur die gewünschte Mischung im Aufnahmegefäß zu erzeugen. Etwaige bei diesem Vorgang entstehende Dämpfe oder auch Gase werden dadurch zuverlässig bei geschlossener Kabine mit Hilfe des der Kabine zugeordneten Abzuges abgeführt und können den Benutzer insgesamt nicht gefährden.

Sobald der Mischvorgang abgeschlossen ist, kann die Kabine geöffnet werden, und zwar ausschließlich für den berechtigten Benutzer, das heißt den Benutzer, der zuvor eine positive Zugangsberechtigungsprüfung durchlaufen hat. Die Kabine kann dabei automatisch hochgefahren werden. In diesem Fall handelt es sich bei der Kabine beispielsweise um einen vertikal verfahrbaren Laborabzug, dem in diesem Fall ein Antrieb zugeordnet ist.

Alternativ hierzu kann es sich bei der Kabine aber auch um einen Schrank und insbesondere Sicherheitsschrank handeln, der erst nach Abschluss des Mischvorganges zugänglich wird. Dazu mag der einen oder mag den mehreren Türen des fraglichen Sicherheitsschrankes eine Verriegelungseinheit zugeordnet sein, welche die fragliche Tür erst nach Abschluss des Mischvorganges freigibt. In diesem Fall lässt sich die Tür ausschließlich seitens des berechtigten Benutzers öffnen. Das kann manuell oder ebenfalls motorisch erfolgen.

Nach weiterer vorteilhafter Ausgestaltung ist die Kabine nicht nur während des Mischvorganges geschlossen. Sondern es hat sich bewährt, wenn die Kabine im Anschluss an den Mischvorgang während einer einstellbaren weiteren Zeitspanne ebenfalls geschlossen ist. Erst danach wird die Kabine für den berechtigten Benutzer geöffnet. In diesem Fall ist folglich die Kabine über den eigentlichen Mischvorgang hinaus geschlossen, und zwar unter Berücksichtigung der einstellbaren weiteren Zeitspanne. Hierbei trägt die Erfindung dem Umstand Rechnung, dass beispielsweise beim Mischvorgang entstehende Dämpfe oder Gase im Innern der Kabine nach Beendigung des Mischvorganges mit Hilfe des Abzuges noch nicht vollständig abgesaugt und abtransportiert worden sind, sondern dieser Vorgang eine entsprechende Zeit erfordert.

Die einstellbare weitere Zeitspanne kann dabei in Abhängigkeit von den im Innern der Kabine befindlichen Gefahrstoffen bzw. den Gefahrstoffbehältern, der erzeugten Mischung und insbesondere der Menge an potentiell entstehenden Gasen oder Dämpfen variiert werden. Eine solche Variation ist mit Hilfe der Einheit möglich, an welcher die Rezeptur eingelesen wird. Denn anhand der Daten für die Rezeptur, insbesondere hinsichtlich der eingesetzten Chemikalien und deren Mengen, kann die fragliche Einheit Abschätzungen im Hinblick auf die Menge an entstehenden Dämpfen oder Gasen beim Mischvorgang vornehmen. Je mehr dieser fraglichen gesundheitsgefährdenden Dämpfe oder Gase im Innern der Kabine entstehen, desto länger wird man die einstellbare weitere Zeitspanne bemessen. Das heißt, die Einheit zum Einlesen der Rezeptur steuert nach Maßgabe der Rezeptur und der gewünschten Mischungskomponenten sowie ihrer jeweiligen Menge die Dauer der einstellbaren weiteren Zeitspanne, während derer die Kabine auch nach Abschluss des Mischvorganges noch geschlossen bleibt. Hierdurch wird ein maximaler Schutz der Benutzer und des Bedienpersonals erreicht.

Bei der fraglichen Einheit zum Einlesen der Rezeptur handelt es sich typischerweise um eine Bedieneinheit, beispielsweise eine Tastatur. Alternativ oder zusätzlich kann die Einheit auch als Leseeinheit, beispielsweise als Barcodescanner, ausgelegt sein. In jedem Fall lässt sich die gewünschte und im Innern der Kabine mit Hilfe der Mischvorrichtung hergestellte Rezeptur über die Einheit eingeben, welche im Regelfall außenseitig an der Kabine angebracht ist. Das kann über die Tastatur mit Hilfe eines dort eingegebenen Rezepturcodes erfolgen, welcher zu der gewünschten und in einem Speicher der Einheit hinterlegten Rezeptur korrespondiert. Es ist aber auch möglich, über die Leseeinheit als Bestandteil der Einheit eine frei wählbare Rezeptur einzulesen und dann an die im Innern der Kabine befindliche Mischvorrichtung zu übermitteln. In diesem Fall kann die Leseeinheit als Scanner, beispielsweise Barcodescanner, arbeiten.

Grundsätzlich ist es natürlich auch denkbar, dass die Leseeinheit mit einer Schnittstelle ausgerüstet ist, über welche die zur Realisierung der Rezeptur erforderlichen Daten an die Einheit übermittelt werden. Die Schnittstelle kann dabei drahtgebunden oder drahtlos mit einem entsprechenden Eingabegerät für die Rezeptur kommunizieren.

Darüber hinaus hat es sich als besonders vorteilhaft erwiesen, wenn die Einheit mit der Zugangskontrolleinheit gekoppelt ist. Denn hierdurch wird die Rezepteingabe an eine Berechtigungsprüfung des Benutzers gekoppelt. Das heißt, die Rezepteingabe wird meistens nur von einem berechtigten Benutzer akzeptiert. Außerdem kann auf diese Weise die Rezepteingabe nicht nur an eine Berechtigungsprüfung des Benutzers, sondern auch an eine oder mehrere Berechtigungsstufen des Benutzers gekoppelt werden. In diesem Fall lässt sich die fragliche Rezepteingabe an unterschiedliche hierarchische Berechtigungsstufen des jeweiligen Benutzers knüpfen.

So ist es beispielsweise denkbar, dass besonders giftige Rezepturen oder hochexplosive Rezepturen an der Einheit zur Rezepteingabe nur wirksam von einem Benutzer gemacht und die entsprechende Rezeptur im Innern der Kabine umgesetzt werden kann, nachdem die Zugangskontrolleinheit zuvor nicht nur die Berechtigung des Benutzers überprüft hat, sondern auch seine zugehörige hierarchische Berechtigungsstufe für die fragliche Rezepteingabe. Das heißt, die Einheit und die an dieser Stelle erfolgende Rezepteingabe ist zunächst einmal daran gekoppelt, dass sich zuvor ein Benutzer an der Zugangskontrolleinheit angemeldet hat und eine positive Zugangsberechtigungsprüfung erfolgt ist. Nur dann kann überhaupt ein Rezept abgearbeitet werden bzw. lässt sich eine zulässige Rezepteingabe an der Einheit realisieren.

Je nach gewünschtem Rezept kann dann die grundsätzliche Berechtigungsprüfung des Bedieners oder Benutzers noch mit verschiedenen hierarchischen Berechtigungsstufen gekoppelt werden. Das heißt, eine beispielsweise hochgiftige oder hochexplosive Rezeptur kann nur ein Benutzer mit Hilfe der erfindungsgemäßen Mischstation erzeugen und aus dieser entnehmen, wenn er im Beispielfall über die höchste Berechtigungsstufe verfügt. Die Berechtigungsstufe wird dabei zusammen mit der allgemeinen Berechtigungsprüfung zuvor anhand der jeweiligen den Benutzer individualisierenden Daten mit Hilfe der Zugangskontrolleinheit überprüft. Dagegen wird man unproblematische Rezepturen typischerweise an eine niedrigste Berechtigungsstufe koppeln oder auch koppeln können.

Jedenfalls lässt sich auf diese Weise nicht nur sicherstellen, dass das gewünschte Rezept an einen zuvor auf seine Berechtigung hin geprüften Benutzer - und nur an diesen - abgegeben wird. Sondern je nach Rezept bzw. Rezeptur erfolgt die Abgabe an den Benutzer zusätzlich erst nach Prüfung seiner hierarchischen Berechtigungsstufe dahingehend, ob der fragliche Benutzer zur Realisierung der Rezeptur und deren Entnahme überhaupt berechtigt und befugt ist.

Wie bereits erläutert, ist die fragliche Einheit zur Eingabe der Rezeptur mit der Zugangskontrolleinheit zur Prüfung des zutrittswilligen Benutzers gekoppelt. Hier hat sich als besonders günstig und konstruktiv einfach eine Lösung erwiesen, bei welcher die Einheit und die Zugangskontrolleinheit konstruktiv zusammenfallen. Dann definieren die Einheit und die Zugangskontrolleinheit eine kombinierte Rezept-/Zugangskontrolleinheit. Die fragliche kombinierte Rezept-/Zugangskontrolleinheit ist dabei wiederum außenseitig an der zu öffnenden und verschließbaren Kabine vorgesehen und folglich bei geschlossener Kabine allgemein zugänglich.

Die Mischvorrichtung im Innern der Kabine ist mit wenigstens zwei dem jeweils eingangsseitig zugeführten Gefahrstoff zugeordneten Mengenmesseinrichtungen ausgerüstet. Meistens ist die jeweilige Mengenmesseinrichtung zusätzlich mit einer Pumpeinrichtung kombiniert. Das heißt, die Mischvorrichtung ist generell zusätzlich zu den Mengenmesseinrichtungen mit zumindest zwei dem jeweils eingangsseitig zugeführten Gefahrstoff zugeordneten Pumpeinrichtungen ausgerüstet. Die jeweilige Mengenmesseinrichtung und die Pumpeinrichtung können dabei als kombinierte Baueinheit ausgelegt sein, was selbstverständlich nur beispielhaft gilt und keinesfalls zwingend ist.

Jedenfalls lässt sich mit Hilfe der Mengenmesseinrichtung in Verbindung mit der Pumpeinrichtung der jeweils der Mischvorrichtung zugeführte Gefahrstoff genauestens dosieren. Die Dosierung wird dabei regelmäßig von einer Steuereinheit vorgegeben, und zwar nach Maßgabe der zuvor mit Hilfe der Einheit eingelesenen Daten der gewünschten Rezeptur bzw. nach Maßgabe der Rezepteingabe. Dazu ist die fragliche Steuereinheit zur Auswertung von Signalen der jeweiligen Mengenmesseinrichtung und Ansteuerung der Pumpeinrichtung vorgesehen und ausgerüstet. Außerdem lassen sich auf diese Weise seitens der Steuereinheit Verbrauchsmengen für den jeweiligen Gefahrstoff erfassen.

Nach vorteilhafter Ausgestaltung der Erfindung mit besonderer Bedeutung kann die Steuereinheit die auf diese Weise erfassten Verbrauchsmengen des jeweiligen Gefahrstoffes auf Plausibilität und/oder Sicherheit hin überprüfen. Dabei wird meistens so vorgegangen, dass die von der Steuereinheit jeweils erfassten Verbrauchsmengen des zugehörigen Gefahrstoffes beispielsweise einem Benutzerkonto, einem Gesamtverbrauchskonto, einem Lagerkonto, einem Nachbestellungskonto etc. zugewiesen werden.

Die Zuweisung der erfassten Verbrauchsmengen des jeweiligen Gefahrstoffes an das Benutzerkonto ist schon deshalb problemlos und erfolgt obligatorisch, weil vor der zulässigen Rezepteingabe zunächst die Zugangskontrollprüfung des zutrittswilligen Benutzers stattgefunden hat. Das heißt, nur dann, wenn sich ein zutrittswilliger Bediener oder Benutzer zulässig gegenüber der Zugangskontrolleinheit ausgewiesen hat und dessen Zugangsberechtigung positiv geprüft worden ist, kann überhaupt eine gültige Rezepteingabe erfolgen. Dadurch stellt die Erfindung sicher, dass die anschließend mit der Abarbeitung des Rezeptes verbundenen Daten, insbesondere hinsichtlich der Verbrauchsmengen des jeweiligen Gefahrstoffes, dem zuvor eindeutig identifizierten Benutzer zugewiesen werden können. Aus diesem Grund kann die Steuereinheit die erfassten Verbrauchsmengen des jeweiligen Gefahrstoffes auch dem damit gleichzeitig identifizierten Benutzerkonto zuweisen.

Darüber hinaus lassen sich auf diese Weise die Verbrauchsmengen dem bereits angesprochenen Gesamtverbrauchskonto zuweisen. Mit Hilfe des Gesamtverbrauchskontos kann beispielsweise der Gesamtverbrauch an den jeweiligen Gefahrstoffen in einem Labor, einer Firma, einer Abteilung etc. ermittelt und erfasst werden. Über das separat mit den entsprechenden Daten gefütterte Lagerkonto kann der Verbrauch des jeweiligen Gefahrstoffes mit einer auf dem Lagerkonto jeweils hinterlegten Lagermenge verglichen werden. Dadurch lässt sich der Restbestand des betreffenden Gefahrstoffes ermitteln und kann dann dem Nachbestellungskonto zugewiesen werden, welches eine entsprechende Empfehlung für eine Nachbestellung abgibt oder von sich aus eine Nachbestellung initiiert.

Die mit Hilfe der Steuereinheit erfasste Verbrauchsmenge des jeweiligen Gefahrstoffes kann nicht nur im Sinne der zuvor beschriebenen Lagerhaltung ausgewertet werden. Sondern es sind auch Plausibilitätsprüfungen möglich. In diesem Fall wird man die jeweilige Verbrauchsmenge bzw. die einzelnen Verbrauchsmengen dahingehend überprüfen oder kann eine entsprechende Überprüfung vornehmen, ob nicht beispielsweise eine übermäßige Menge eines Gefahrstoffes entnommen wurde, die zu den anderen entnommenen Gefahrstoffen nicht "passt".

Beispielsweise wird man die Entnahme von Lösungsmitteln daran knüpfen oder knüpfen können, ob beispielsweise überhaupt entsprechende und aufzulösende Materialien verarbeitet werden oder verarbeitet worden sind. Neben einer solchen Plausibilitätsprüfung ist auch eine Überprüfung der Sicherheit anhand der von der Steuereinheit erfassten Verbrauchsmengen des jeweiligen Gefahrstoffes möglich. In diesem Fall kann man die jeweils entnommenen Verbrauchsmengen dahingehend überprüfen, ob diese beispielsweise zur Herstellung eines explosiven Gemisches geeignet sind. Dadurch lassen sich Abgaben an Benutzer identifizieren, die als von der Sicherheit her kritisch zu beurteilen sind und kann auf diese Weise der fragliche Benutzer festgestellt werden. Ebenso kann eine solche Überprüfung der Sicherheit auch an einen bestimmten Raum oder an eine bestimmte Mischstation geknüpft werden.

Darüber hinaus ist die Steuereinheit in der Regel so ausgelegt, dass sie nach Maßgabe von Signalen der Zugangskontrolleinheit eine Verriegelungseinheit für die Kabine ansteuert. Das heißt, die Zugangskontrolleinheit gibt ein Signal an die Steuereinheit ab, falls sich an der Zugangskontrolleinheit ein berechtigter Benutzer angemeldet hat und die Zugangsberechtigungsprüfung positiv beendet worden ist. In diesem Fall sorgt die Steuereinheit dafür, dass das Verriegelungselement bzw. die zuvor angesprochene Verriegelungseinheit für die Kabine angesteuert wird bzw. angesteuert werden kann, und zwar zumindest nach Beendigung des Mischvorganges bzw. nach Beendigung des Mischvorganges zuzüglich der einstellbaren weiteren Zeitspanne. Die Ansteuerung der Verriegelungseinheit seitens der Steuereinheit sorgt im Beispielfall dafür, dass die Kabine automatisch geöffnet wird oder seitens des Benutzers geöffnet werden kann. Spätestens dann kann der berechtigte Benutzer das Aufnahmegefäß mit der gewünschten und darin abgebildeten Mischung nach der zuvor eingegebenen Rezeptur entnehmen.

Schlussendlich ist die Steuereinheit vorteilhaft noch mit einem Drucker zur Ausgabe eines zumindest die Rezeptur ausweisenden Etikettes für das Aufnahmegefäß verbunden. Meistens weist das fragliche Etikett nicht nur die zugrunde liegende Rezeptur aus, sondern regelmäßig auch noch das Herstellungsdatum sowie den Benutzer, welcher die Rezeptur bzw. den daran anschließenden Mischvorgang initiiert hat und folglich auch das Aufnahmegefäß aus der Mischstation entnommen hat. Dadurch wird das Aufnahmegefäß zu einer universellen Informationsquelle, welche nicht nur die im Innern befindliche Mischung und die dahinter stehende Rezeptur und deren Herstellungsdatum ausweist, sondern auch die hierfür jeweils verantwortliche Person bzw. den entsprechenden Benutzer. Das ist besonders wichtig, um Verantwortlichkeiten festzustellen und auch zur Fehler- und Qualitätsanalyse.

Im Ergebnis wird die Verwendung einer Mischstation für flüssige Gefahrstoffe beschrieben und eine Mischstation zur Verfügung gestellt, die nicht nur einen erheblichen Sicherheitsgewinn für den jeweiligen Benutzer darstellt, sondern auch umfassende Informationen über die Rezeptur, den Hersteller der Rezeptur usw.. Darüber hinaus eröffnen die mit Hilfe der Mischstation gewonnenen Daten sowohl die Möglichkeit zur Plausibilitätsüberprüfung als auch im Hinblick auf die Sicherheit und eine eventuelle Terrorabwehr. Hierin sind die wesentlichen Vorteile zu sehen.

Im Folgenden wird die Erfindung anhand einer lediglich ein Ausführungsbeispiel darstellenden Zeichnung näher erläutert; es zeigen:

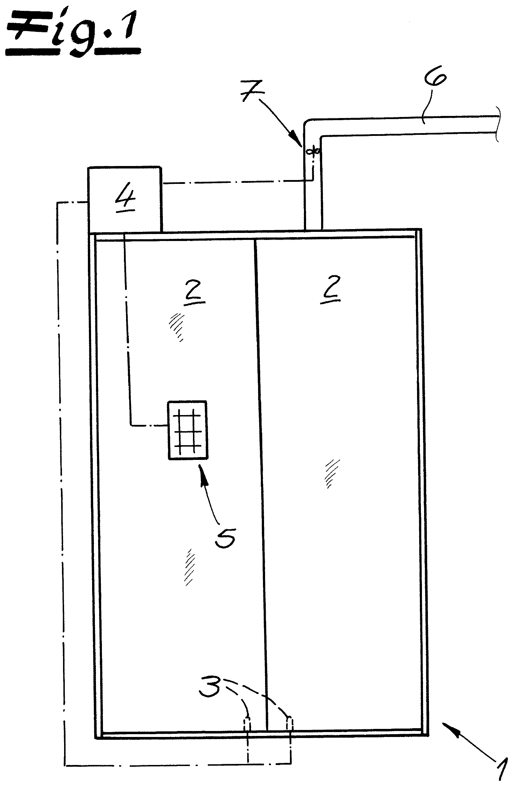

- Fig. 1: eine Mischstation nach der Erfindung in einer Übersicht und

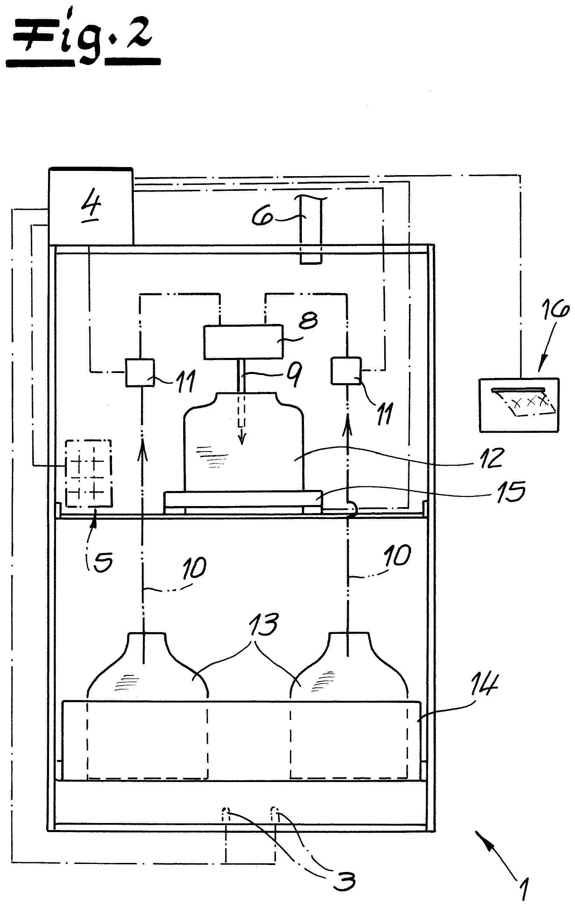

- Fig. 2: ein Detail aus der Fig. 1.

In den Figuren ist eine Mischstation für insbesondere flüssige Gefahrstoffe dargestellt. Die Mischstation verfügt über eine Kabine 1, die sich öffnen und verschließen lässt. Bei der Kabine 1 kann es sich um einen größtenteils einteiligen Laborabzug handeln, der zum Öffnen hoch- und zum Verschließen niedergefahren wird. Das kann manuell oder motorisch erfolgen. Diese Variante ist jedoch nicht dargestellt. Nach dem Ausführungsbeispiel ist die Kabine 1 als Sicherheitsschrank 1 ausgebildet.

Die Kabine bzw. der Sicherheitsschrank 1 verfügt ebenfalls nicht einschränkend über zwei Türen 2, die sich öffnen lassen. Die Türen 2 sind im Ausführungsbeispiel mit Hilfe einer Verriegelungseinheit bzw. eines Verriegelungselementes 3 gegenüber einem Schrankkorpus verriegelt. Um die Türen 2 zu öffnen, muss die Verriegelungseinheit 3 in entsprechendem Sinne von einer Steuereinheit 4 beaufschlagt werden. Die Steuereinheit 4 kann im Innern des Sicherheitsschrankes 1 oder auch kopfseitig des Sicherheitsschrankes 1 vorgesehen sein. Meistens wird eine kopfseitige Anbringung der Steuereinheit 4 präferiert, um diese vor etwaigen im Innern des Sicherheitsschrankes 1 entstehenden Dämpfen oder auch Gasen zu schützen und ihre Funktionsfähigkeit hierdurch nicht zu beeinträchtigen.

Außenseitig der Kabine bzw. des Sicherheitsschrankes 1 ist noch eine Zugangskontrolleinheit 5 vorgesehen. Die Zugangskontrolleinheit 5 ist nach dem Ausführungsbeispiel außen an eine Tür 2 des Sicherheitsschrankes 1 angeschlossen. Dadurch ist gewährleistet, dass sich ein zutrittswilliger Bediener oder Benutzer zunächst an der Zugangskontrolleinheit 5 anmelden muss. Denn die Türen 2 sind geschlossen und mittels der Verriegelungseinheit 3 verriegelt.

Zum weiteren grundsätzlichen Aufbau der erfindungsgemäßen Mischstation gehört dann noch ein Abzug 6, welcher an den Sicherheitsschrank 1 angeschlossen ist und zu seiner Entlüftung dient. Dazu ist der Abzug 6 mit einem Lüfter 7 ausgerüstet, welcher seitens der Steuereinheit 4 - ebenso wie die Verriegelungseinheit 3 - angesteuert und beaufschlagt wird.

Im Innern der zu öffnenden und verschließbaren Kabine bzw. des Sicherheitsschrankes 1 ist eine Mischvorrichtung 8, 9, 10, 11 vorgesehen. Die Mischvorrichtung 8, 9, 10, 11 weist eine Mischkammer 8 und eine ausgangsseitig an die Mischkammer 8 angeschlossene Abgabeleitung 9 auf. Über die Abgabeleitung bzw. Ausgangsleitung 9 wird das im Innern der Mischkammer 8 hergestellte Gemisch bzw. die Mischung an ein Aufnahmegefäß 12 ausgegeben. Darüber hinaus ist die Mischvorrichtung 8, 9, 10, 11 noch mit zwei Eingangsleitungen 10 ausgerüstet, die jeweils in Gefahrstoffbehälter 13 münden. Im Ausführungsbeispiel sind zwei Gefahrstoffbehälter 13 vorgesehen, die in ihrem Innern unterschiedliche Gefahrstoffe, beispielsweise verschiedene flüssige Laborchemikalien bevorraten. Die beiden Gefahrstoffbehälter 13 werden im Ausführungsbeispiel und nicht einschränkend in einer ausziehbaren Schublade 14 bzw. auf einem Auszug 14 im Innern des Sicherheitsschrankes 1 bevorratet.

Jede der beiden Eingangsleitungen 10 ist im Beispielfall noch mit einer kombinierten Pumpeinrichtung/Mengenmesseinrichtung 11 ausgerüstet. Das heißt, mit Hilfe der kombinierten Pumpeinrichtung/Mengenmesseinrichtung 11 kann nicht nur über die in den jeweiligen Gefahrstoffbehälter 13 mündende Eingangsleitung 10 der entsprechende Gefahrstoff aus dem Gefahrstoffbehälter 13 zur Mischkammer 8 gefördert werden, sondern erfolgt auch eine Volumen- bzw. Mengenmessung des jeweils der Mischkammer 8 zugeführten Gefahrstoffes. Dadurch kann über die Mischkammer 8 eine gewünschte Rezeptur an die Abgabeleitung 9 abgegeben und im unter der Abgabeleitung 9 stehenden Aufnahmegefäß 12 gesammelt und bevorratet werden. Das Aufnahmegefäß 12 wird zu diesem Zweck auf einer Plattform 15 aufgenommen, die - ebenso wie die zuvor bereits angesprochenen kombinierten Pumpeinrichtungen/Mengenmesseinrichtungen 11 - an die Steuereinheit 4 angeschlossen ist. Tatsächlich ist die Plattform 15 mit einer Wägezelle oder allgemein einer Wägeeinrichtung ausgerüstet, deren Messwerte seitens der Steuereinheit 4 ausgewertet werden.

Innerhalb der Kabine bzw. des Sicherheitsschrankes 1 ist folglich die Mischvorrichtung 8, 9, 10, 11 angeordnet. Außerdem befinden sich die beiden Gefahrstoffbehälter 13 im Innern der Kabine 1. Darüber hinaus ist im Innern der geschlossenen Kabine 1 der Auszug bzw. die Schublade 14 angeordnet, welche die beiden Gefahrstoffbehälter 13 mit dem darin jeweils befindlichen Gefahrstoff trägt. Die Steuereinheit 4 ist demgegenüber außerhalb der Kabine 1, beispielsweise kopfseitig, realisiert. Mit Hilfe des Abzuges 6 in Verbindung mit dem Lüfter 7 werden etwaige im Innern der Kabine bzw. des Sicherheitsschrankes 1 entstehende Dämpfe oder Gase abgeführt.

Die Mischvorrichtung 8, 9, 10, 11 ist eingangsseitig mit den zumindest zwei Gefahrstoffbehältern 13 verbunden, nämlich über die jeweils zugehörige Eingangsleitung 10. Ausgangsseitig gibt die Mischvorrichtung 8, 9, 10, 11 die im Innern der Mischkammer 8 erzeugte Mischung an das Aufnahmegefäß 12 ab, und zwar über die Abgabeleitung 9 unter Berücksichtigung einer bestimmten Rezeptur.

Das alles erfolgt erst dann, wenn sich ein Benutzer an der außenseitig an eine der beiden Türen 2 des Sicherheitsschrankes 1 angebrachten Zugangskontrolleinheit 5 angemeldet und seine Zugangsberechtigung nachgewiesen hat. Zu diesem Zweck ist die Zugangskontrolleinheit 5 im Ausführungsbeispiel und nicht einschränkend als Tastaturfeld ausgelegt. Über das Tastaturfeld muss sich der zutrittswillige Benutzer mit Hilfe eines dort eingegebenen Zugangscodes identifizieren. Erst bei einer positiven Prüfung der Zugangsberechtigung des Benutzers ist die Mischstation entsprechend der Erfindung bereit und in der Lage, eine gewünschte Rezeptur mit Hilfe der Mischvorrichtung 8, 9, 10, 11 herzustellen oder herstellen zu können. Außerdem setzt die positive Zugangsberechtigungsprüfung des Benutzers an der Zugangskontrolleinheit 5 voraus, dass die Kabine 1 überhaupt geöffnet wird.

Denn im Rahmen der Erfindung ist die Kabine 1 zumindest während des Mischvorganges geschlossen. Erst nach Beendigung des Mischvorganges wird die Kabine 1 für den berechtigten Benutzer geöffnet. Dazu ist es erforderlich, dass sich der berechtigte Benutzer vorher an der Zugangskontrolleinheit 5 ausgewiesen hat. Da die Zugangskontrolleinheit 5 an die Steuereinheit 4 angeschlossen ist, lässt sich auf diese Weise und bei einer positiven Prüfung der Zugangsberechtigung die Verriegelungseinheit 3 mittels der Steuereinheit 4 entriegeln. Anschließend kann der berechtigte Benutzer die Kabine 1 beispielsweise öffnen, um dort das Aufnahmegefäß 12 zu platzieren. Danach muss die Kabine 1 wieder geschlossen werden. Denn der Mischvorgang mit Hilfe der im Innern der Kabine 1 befindlichen Mischvorrichtung 8, 9, 10, 11 setzt voraus, dass die Kabine 1 geschlossen ist.

Der Schließvorgang der Kabine 1 wird mit Hilfe der Verriegelungseinheit 3 erfasst, die zu diesem Zweck an die Steuereinheit 4 angeschlossen ist. Das heißt, nur dann wenn die Steuereinheit 4 den Zustand "verriegelt" der Verriegelungseinheit 3 für die beiden Türen 2 im Ausführungsbeispiel des Sicherheitsschrankes 1 ermittelt, gibt die Steuereinheit 4 die Mischvorrichtung 8, 9, 10, 11 frei bzw. erst dann können die jeweiligen Pumpeinrichtungen der kombinierten Pumpeinrichtung/Mengenmesseinrichtung 11 in der zugehörigen Eingangsleitung 10 seitens der Steuereinheit 4 beaufschlagt werden. Auf diese Weise lässt sich die Mischstation auch so vorteilhaft betreiben, dass die Kabine 1 im Anschluss an den Mischvorgang während einer einstellbaren weiteren Zeitspanne geschlossen ist und erst danach für den berechtigten Benutzer geöffnet wird. Diese weitere Zeitspanne trägt dem Umstand Rechnung, dass während des Mischvorganges entstehende Gase oder Dämpfe einwandfrei mit Hilfe des Abzuges 6 durch Beaufschlagen des Lüfters 7 aus dem Innern der Kabine 1 entfernt worden sind.

Das heißt, nach der Zugangsberechtigungsprüfung des Benutzers und Eingabe der gewünschten Rezeptur prüft die Steuereinheit 4 zunächst, ob sich die Verriegelungseinheit 3 im Zustand "verriegelt" befindet. Dann ist auch die Kabine 1 geschlossen. Erst dann beaufschlagt die Steuereinheit 4 die Mischvorrichtung 8, 9, 10, 11, indem typischerweise die jeweils kombinierte Pumpeinrichtung/Mengenmesseinrichtung 11 in der zugehörigen Eingangsleitung 10 beaufschlagt wird. Während der gesamten Dauer des Mischvorganges bleibt die Kabine 1 geschlossen. Hierzu korrespondiert der Zustand "verriegelt" der Verriegelungseinheit 3, der mit Hilfe der Steuereinheit 4 ausgewertet und überprüft werden kann. Außerdem sorgt die Steuereinheit 4 durch Ansteuerung des Lüfters bzw. der Lüftereinrichtung 7 dafür, dass etwaige im Innern der Kabine 1 entstehende Dämpfe oder Gase einwandfrei über den Abzug 6 abgezogen werden.

Nach vorteilhafter Ausgestaltung bleibt die Kabine 1 auch nach Beendigung des Mischvorganges während der einstellbaren weiteren Zeitspanne geschlossen. Diese weitere Zeitspanne berücksichtigt die eventuell beim Mischvorgang im Innern der Kabine 1 entstehende Menge an gefährlichen Gasen oder Dämpfen. Entsprechende Angaben lassen sich aus der zuvor eingegebenen Rezeptur herleiten und die Steuereinheit 4 berechnet hieraus die einstellbare Zeitspanne. Während dieser einstellbaren Zeitspanne befindet sich die Verriegelungseinheit 3 nach wie vor im Zustand "verriegelt" und die Kabine 1 ist geschlossen. Außerdem steuert die Steuereinheit 4 den Lüfter bzw. die Lüftereinrichtung 7 auch während dieser Zeitspanne an, um etwaige im Innern noch befindliche Gase oder Dämpfe auch nach Beendigung des Mischvorganges aus dem Innern der Kabine 1 abziehen zu können.

Erst wenn die einstellbare weitere Zeitspanne nach Beendigung des Mischvorganges absolviert ist, gibt die Steuereinheit die Verriegelungseinheit 3 frei. Die Verriegelungseinheit 3 geht dann in den Zustand "entriegelt" über und der berechtigte Benutzer kann die jeweilige Tür 2 des Sicherheitsschrankes 1 im Beispielfall öffnen. Anschließend kann der fragliche Benutzer das Aufnahmegefäß 12 von der Plattform 15 entnehmen. Während des Mischvorganges hat die Steuereinheit 4 darüber hinaus noch die der Plattform 15 zugeordnete Wägeeinrichtung dahingehend ausgewertet, dass beispielsweise das Aufnahmegefäß 12 einwandfrei gefüllt ist und eine Überfüllung vermieden wird. Dazu ist es beispielsweise möglich und denkbar, dass der berechtigte Benutzer vor Platzieren des jeweiligen Aufnahmegefäßes 12 auf der Plattform 15 das betreffende Aufnahmegefäß 12 gegenüber der Steuereinheit 4 identifiziert. Das kann erneut über das Tastaturfeld an der Zugangskontrolleinheit 5 erfolgen.

Die Rezeptur lässt sich generell über eine separate Einheit einlesen und an die Mischvorrichtung 8, 9, 10, 11 übertragen. Im Ausführungsbeispiel ist die fragliche Einheit mit der Zugangskontrolleinheit 5 gekoppelt bzw. fällt mit dieser zusammen. Das heißt, der zutrittswillige Benutzer muss sich zunächst an der Zugangskontrolleinheit 5 ausweisen und seine Berechtigung nachweisen. Erst danach ist eine zulässige Rezepteingabe möglich. Die Eingabe des Rezeptes erfolgt erneut an der Zugangskontrolleinheit 5. Dazu kann das betreffende Rezept zu einem über die Tastatur im Beispielfall eingegebenen Rezeptcode gehören. Jedenfalls fallen die fragliche Einheit zur Rezepteingabe und die Zugangskontrolleinheit 5 konstruktiv zusammen und definieren eine kombinierte Rezept-/Zugangskontrolleinheit 5.

Die Steuereinheit 4 kann nicht nur die Pumpeinrichtung der kombinierten Mengenmesseinrichtung/Pumpeinrichtung 11 ansteuern. Sondern mit Hilfe der Steuereinheit 4 werden auch Signale der Mengenmesseinrichtung aufgenommen. Aus den Signalen der Mengenmesseinrichtung der kombinierten Mengenmesseinrichtung/Pumpeinrichtung 11 kann die Steuereinheit 4 auf Verbrauchsmengen der jeweiligen Gefahrstoffe rückschließen. Diese Verbrauchsmengen lassen sich - wie einleitend bereits beschrieben - auf Plausibilität und/oder Sicherheit hin überprüfen. Außerdem weist die Steuereinheit 4 die erfassten Verbrauchsmengen des jeweiligen Gefahrstoffes im Regelfall einem Benutzerkonto, einem Gesamtverbrauchskonto, gegebenenfalls einem Lagerkonto und zusätzlich einem Nachbestellungskonto zu, wie dies ebenfalls einleitend bereits beschrieben wurde.

Nach Beendigung des Mischvorganges sowie gegebenenfalls der variablen einstellbaren Zeitspanne steuert die Steuereinheit 4 die Verriegelungseinheit 3 an. Das geschieht ergänzend nach Maßgabe von Signalen der Zugangskontrolleinheit 5, nämlich nur dann, wenn sich zuvor ein berechtigter Benutzer angemeldet hat und dem Benutzer die ermittelten Verbrauchsmengen an den jeweiligen Gefahrstoffen zugewiesen worden sind. Nachdem der berechtigte Benutzer die Kabine 1 für die Entnahme des Aufnahmegefäßes 12 geöffnet hat, kann das Aufnahmegefäß 12 zusätzlich noch mit einem Etikett ausgerüstet werden. Zu diesem Zweck ist die Steuereinheit 4 mit einem ausgangsseitigen Drucker 16 für das fragliche Etikett verbunden. Das betreffende Etikett gibt nicht nur die hierin befindliche Rezeptur respektive Mischung an Gefahrstoffen wieder, sondern auch das Herstellungsdatum. Darüber hinaus kann der die Rezeptur herstellende Benutzer auf dem Etikett angegeben werden.

Die mit Hilfe der Steuereinheit 4 erfassten Verbrauchsmengen des jeweiligen Gefahrstoffes lassen sich drahtgebunden oder drahtlos den zuvor bereits beschriebenen unterschiedlichen Konten zuweisen. Das kann auch über ein globales Netzwerk, beispielsweise das Internet, erfolgen. Außerdem ermöglicht diese Vorgehensweise eine Ansteuerung der Steuereinheit 4 von einer übergeordneten Leitstelle aus respektive die Auslesung der Daten der Steuereinheit 4 mit Hilfe dieser örtlich entfernten Leitstelle.

Schlussendlich besteht noch die Möglichkeit, die Rezepteingabe über die kombinierte Rezept-/Zugangskontrolleinheit 5 nicht nur an eine Berechtigungsprüfung des Benutzers zu koppeln, sondern auch an eine zugehörige hierarchische Berechtigungsstufe. Das heißt, je nach gewünschtem Rezept kann die Eingabe des Rezeptes und dessen tatsächliche Umsetzung mit Hilfe der Mischvorrichtung 8, 9, 10, 11 an eine bestimmte hierarchische Berechtigungsstufe des Benutzers gekoppelt werden. So wird man beispielsweise besonders gefährliche und explosive Rezepturen und danach entsprechend hergestellte Mischungen mit Hilfe der Mischvorrichtung 8, 9, 10, 11 beispielsweise daran koppeln, dass die eingangs erfolgte Berechtigungsprüfung des Benutzers an der Zugangskontrolleinheit 5 zugleich auch seine hierfür erforderliche höchste Berechtigungsstufe im Beispielfall nachweist. Nur wenn diese höchste Berechtigungsstufe vorliegt, kann der fragliche zugangsberechtigte Benutzer überhaupt das Rezept zulässig eingeben und wird dieses tatsächlich mit Hilfe der Mischvorrichtung 8, 9, 10, 11 in die gewünschte Mischung umgesetzt. Andernfalls, das heißt falls der berechtigte Benutzer die für die Abarbeitung des Rezeptes erforderliche Berechtigungsstufe nicht erreicht, sorgt die Steuereinheit 4 dafür, dass das Rezept nicht mit Hilfe der Mischvorrichtung 8, 9, 10, 11 umgesetzt wird. In diesem Fall wird die Mischvorrichtung 8, 9, 10, 11 nicht mit Hilfe der Steuereinheit 4 angesteuert, sondern erfolgt beispielsweise eine Meldung an der Zugangskontrolleinheit 5.

## Patentansprüche

1. Verwendung einer Mischstation für flüssige Gefahrstoffe, mit einer zu öffnenden und verschließbaren Kabine (1), ferner mit einer in der Kabine (1) angeordneten Mischvorrichtung (8, 9, 10, 11), welche eingangsseitig mit zumindest zwei Gefahrstoffbehältern (13) verbunden ist und ausgangsseitig eine erzeugte Mischung an wenigstens ein Aufnahmegefäß (12) abgibt, und mit einer Zugangskontrolleinheit (5) für einen Benutzer, **dadurch gekennzeichnet, dass** die Kabine (1) zumindest während des Mischvorganges geschlossen ist und erst danach für den berechtigten Benutzer geöffnet wird.

2. Verwendung nach Anspruch 1, **dadurch gekennzeichnet, dass** die Kabine (1) im Anschluss an den Mischvorgang während einer einstellbaren weiteren Zeitspanne geschlossen ist und erst danach für den berechtigten Benutzer geöffnet wird.

3. Verwendung nach Anspruch 1 oder 2, **dadurch gekennzeichnet, dass** eine Rezeptur der Mischung in geschlossenem Zustand der Kabine (1) an die Mischvorrichtung (8, 9, 10, 11) übermittelt wird.

4. Verwendung nach einem der Ansprüche 1 bis 3, **dadurch gekennzeichnet, dass** die Rezeptur über eine separate Einheit eingelesen und an die Mischvorrichtung (8, 9, 10, 11) übertragen wird.

5. Verwendung nach Anspruch 4, **dadurch gekennzeichnet, dass** die Einheit als Bedieneinheit ausgebildet ist.

6. Verwendung nach Anspruch 4 oder 5, **dadurch gekennzeichnet, dass** die Einheit als Leseeinheit ausgelegt ist.

7. Verwendung nach einem der Ansprüche 4 bis 6, **dadurch gekennzeichnet, dass** die Einheit mit der Zugangskontrolleinheit (5) gekoppelt ist, um die Rezepteingabe an eine Berechtigungsprüfung des Benutzers zu koppeln.

8. Verwendung nach Anspruch 7, **dadurch gekennzeichnet, dass** die Einheit und Zugangskontrolleinheit (5) konstruktiv zusammenfallen und eine kombinierte Rezept-/Zugangskontrolleinheit (5) definieren.

9. Verwendung nach einem der Ansprüche 1 bis 8, **dadurch gekennzeichnet, dass** die Mischvorrichtung (8, 9, 10, 11) mit wenigstens zwei dem jeweils eingangsseitig zugeführten Gefahrstoff zugeordneten Mengenmesseinrichtungen (11) ausgerüstet ist.

10. Verwendung nach einem der Ansprüche 1 bis 9, **dadurch gekennzeichnet, dass** die Mischvorrichtung (8, 9, 10, 11) mit mindestens zwei dem jeweils eingangsseitig zugeführten Gefahrstoff zugeordneten Pumpeinrichtungen (11) ausgerüstet ist.

11. Verwendung nach einem der Ansprüche 1 bis 10, **dadurch gekennzeichnet, dass** eine Steuereinheit (4) zur Auswertung von Signalen der Mengenmesseinrichtung (11) und Ansteuerung der Pumpeinrichtung (11) vorgesehen ist.

12. Verwendung nach Anspruch 11, **dadurch gekennzeichnet, dass** von der Steuereinheit (4) erfasste Verbrauchsmengen des jeweiligen Gefahrstoffes auf Plausibilität und/oder Sicherheit hin überprüft werden.

13. Verwendung nach Anspruch 11 oder 12, **dadurch gekennzeichnet, dass** von der Steuereinheit (4) erfasste Verbrauchsmengen des jeweiligen Gefahrstoffes einem Benutzerkonto, einem Gesamtverbrauchskonto, einem Lagerkonto, einem Nachbestellungskonto usw. zugewiesen werden.

14. Verwendung nach einem der Ansprüche 11 bis 13, **dadurch gekennzeichnet, dass** die Steuereinheit (4) nach Maßgabe von Signalen der Zugangskontrolleinheit (5) eine Verriegelungseinheit (3) für die Kabine (1) ansteuert.

15. Verwendung nach einem der Ansprüche 11 bis 14, **dadurch gekennzeichnet, dass** die Steuereinheit (4) mit einem Drucker (16) zur Ausgabe eines zumindest die Rezeptur ausweisenden Etiketts für das Aufnahmegefäß (12) verbunden ist.

## Claims

1. Use of a mixing station for liquid hazardous substances, comprising a booth (1) which can be opened and closed, further comprising a mixing device (8, 9, 10, 11) which is arranged in the booth (1) and which is connected at the inlet side to at least two hazardous substance containers (13) and at the outlet side discharges a produced mixture to at least one receiving vessel (12), and comprising an access control unit (5) for a user, **characterized in that** the booth (1) is closed at least during the mixing process and is only thereafter opened for the authorized user.

2. Use according to claim 1, **characterized in that** following the mixing process, the booth (1) is closed for an adjustable further period of time and is only thereafter opened for the authorized user.

3. Use according to claim 1 or 2, **characterized in that** a recipe of the mixture is transmitted to the mixing device (8, 9, 10, 11) in the closed state of the booth (1).

4. Use according to any one of claims 1 to 3, **characterized in that** the recipe is read in via a separate unit and transmitted to the mixing device (8, 9, 10, 11).

5. Use according to claim 4, **characterized in that** the unit is designed as an operating unit, for example a keyboard.

6. Use according to claim 4 or 5, **characterized in that** the unit is designed as a reading unit.

7. Use according to any one of claims 4 to 6, **characterized in that** the unit is coupled to the access control unit (5) in order to couple the recipe input to an authorization check of the user.

8. Use according to claim 7, **characterized in that** the unit and access control unit (5) constructionally coincide and define a combined recipe/access control unit (5).

9. Use according to any one of claims 1 to 8, **characterized in that** the mixing device (8, 9, 10, 11) is equipped with at least two quantity measuring devices (11) associated with the hazardous substance supplied at the respective inlet side.

10. Use according to any one of claims 1 to 9, **characterized in that** the mixing device (8, 9, 10, 11) is equipped with at least two pumping devices (11) associated with the hazardous substance supplied at the inlet side in each case.

11. Use according to any one of claims 1 to 10, **characterized in that** a control unit (4) is provided for evaluating signals from the quantity measuring device (11) and controlling the pumping device (11).

12. Use according to claim 11, **characterized in that** quantities consumed of the respective hazardous substance recorded by the control unit (4) are checked for plausibility and/or safety.

13. Use according to claim 11 or 12, **characterized in that** quantities consumed of the respective hazardous substance recorded by the control unit (4) are allocated, for example, to a user account, a total consumption account, a storage account, a reordering account, etc.

14. Use according to any one of claims 11 to 13, **characterized in that** the control unit (4) controls a locking unit (3) for the booth (1) according to signals from the access control unit (5).

15. Use according to any one of claims 11 to 14, **characterized in that** the control unit (4) is connected to a printer (16) for outputting a label for the receiving vessel (12), which label at least discloses the recipe.

## Revendications

1. Utilisation d'un poste de mélange pour matières dangereuses liquides avec une cabine (1) à ouvrir et verrouillable, avec en outre un dispositif de mélange (8, 9, 10, 11) disposé dans la cabine (1), lequel est relié côté entrée à au moins deux conteneurs de matière dangereuse (13) et délivre côté sortie un mélange produit à au moins un récipient de réception (12) et avec une unité de contrôle d'accès (5) pour un utilisateur, **caractérisé en ce que** la cabine (1) est fermée au moins pendant l'opération de mélange et n'est ouverte ensuite que par l'utilisateur autorisé.

2. Utilisation selon la revendication 1, **caractérisé en ce que** la cabine (1) est fermée à la suite de l'opération de mélange pendant une autre période de temps réglable et n'est ouverte ensuite que par l'utilisateur autorisé.

3. Utilisation selon la revendication 1 ou 2, **caractérisé en ce qu'**une formulation du mélange est transmise au dispositif de mélange (8, 9, 10, 11) à l'état fermé de la cabine (1).

4. Utilisation selon l'une quelconque des revendications 1 à 3, **caractérisé en ce que** la formulation est lue par une unité séparée et transmise au dispositif de mélange (8, 9, 10, 11).

5. Utilisation selon la revendication 4, **caractérisé en ce que** l'unité est constituée comme unité de commande.

6. Utilisation selon la revendication 4 ou 5, **caractérisé en ce que** l'unité est conçue comme une unité de lecture.

7. Utilisation selon l'une quelconque des revendications 4 à 6, **caractérisée en ce que** l'unité est couplée à l'unité de contrôle d'accès (5) pour coupler l'entrée de la formulation à un contrôle d'autorisation de l'utilisateur.

8. Utilisation selon la revendication 7, **caractérisée en ce que** l'unité et l'unité de contrôle d'accès (5) se confondent du point de vue construction et définissent une unité de formulation/contrôle d'accès (5) combinée.

9. Utilisation selon l'une quelconque des revendications 1 à 8, **caractérisée en ce que** le dispositif de mélange (8, 9, 10, 11) est équipé d'au moins deux dispositifs de mesure de quantités (11) affectés à la matière dangereuse respectivement acheminée côté entrée.

10. Utilisation selon l'une quelconque des revendications 1 à 9, **caractérisée en ce que** le dispositif de mélange (8, 9, 10, 11) est équipé d'au moins deux dispositifs de pompage (11) affectés à la matière dangereuse respectivement acheminée côté entrée.

11. Utilisation selon l'une quelconque des revendications 1 à 10, **caractérisée en ce qu'**une unité de commande (4) est prévue pour l'exploitation des signaux du système de mesure de quantités (11) et le pilotage du dispositif de pompage (11).

12. Utilisation selon la revendication 11, **caractérisée en ce que** les quantités de consommation de la matière dangereuse respective saisies par l'unité de commande (4) sont vérifiées quant à leur plausibilité et/ou sécurité.

13. Utilisation selon la revendication 11 ou 12, **caractérisée en ce que** les quantités de consommation de la matière dangereuse respective saisies par l'unité de commande (4) sont affectées à un compte utilisateur, un compte de consommation totale, un compte de stockage, un compte de réapprovisionnement etc.

14. Utilisation selon l'une quelconque des revendications 11 à 13, **caractérisée en ce que** l'unité de commande (4) pilote une unité de verrouillage (3) pour la cabine (1) en fonction des signaux de l'unité de contrôle d'accès (5).

15. Utilisation selon l'une quelconque des revendications 11 à 14, **caractérisée en ce que** l'unité de commande (4) est reliée à une imprimante (16) pour éditer au moins une étiquette pour le récipient de réception (12) comportant au moins la formulation.
